(19) **Europäisches Patentamt** / **European Patent Office** / **Office européen des brevets**

(11) **EP 1 365 150 B1**

(12) **EUROPEAN PATENT SPECIFICATION**

(45) Date of publication and mention
of the grant of the patent:
**24.08.2016 Bulletin 2016/34**

(21) Application number: **01948010.2**

(22) Date of filing: **13.07.2001**

(51) Int Cl.:
*F04B 27/18* *(2006.01)*     *F04B 49/22* *(2006.01)*

(86) International application number:
**PCT/JP2001/006097**

(87) International publication number:
**WO 2002/061280 (08.08.2002 Gazette 2002/32)**

(54) **VARIABLE DISPLACEMENT TYPE SWASH PLATE CLUTCH-LESS COMPRESSOR**

VERDRÄNGUNGSVERDICHTER OHNE TAUMELSCHEIBENKUPPLUNG

COMPRESSEUR SANS EMBRAYAGE À CAME PLATE À CYLINDRÉE VARIABLE

(84) Designated Contracting States:
**DE FR GB**

(30) Priority: **29.01.2001 JP 2001019443**

(43) Date of publication of application:
**26.11.2003 Bulletin 2003/48**

(73) Proprietor: **Zexel Valeo Climate Control Corporation**
**Ohsato-gun, Saitama 360-0193 (JP)**

(72) Inventors:
• **KAZAHAYA, Yukio,**
**Zexel Valeo Climate Control Co.**
**Osato-gun,**
**Saitama 360-0193 (JP)**
• **KISO, Norikatsu,**
**Zexel Valeo Climate Control Co.**
**Osato-gun,**
**Saitama 360-0193 (JP)**

(74) Representative: **Hofmann, Harald**
**Sonnenberg Fortmann**
**Patent- und Rechtsanwälte**
**Postfach 33 08 65**
**80068 München (DE)**

(56) References cited:
**EP-A- 1 059 444**      **WO-A- 99/28627**
**WO-A- 99/66203**     **GB-A- 2 116 754**
**JP-A- 7 127 566**      **JP-A- 2000 314 377**
**JP-A- 2000 345 967**  **US-A- 4 674 012**
**US-A- 5 112 198**      **US-A- 5 577 894**

• **PATENT ABSTRACTS OF JAPAN vol. 2000, no. 14, 5 March 2001 (2001-03-05) & JP 2000 314377 A (BOSCH AUTOMOTIVE SYSTEMS CORP), 14 November 2000 (2000-11-14)**
• **PATENT ABSTRACTS OF JAPAN vol. 1998, no. 14, 31 December 1998 (1998-12-31) & JP 10 253174 A (TOYOTA AUTOM LOOM WORKS LTD), 25 September 1998 (1998-09-25)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

This invention relates to a clutchless variable capacity swash plate compressor as defined in the preamble of claim 1. Such a compressor is known e.g. from US-A-5 112 198. More particularly the invention relates to a clutchless variable capacity swash plate compressor to which torque of an engine is constantly transmitted.

Background Art

Among variable capacity swash plate compressors for air conditioners on vehicles, a clutchless variable capacity swash plate compressor without an electromagnetic clutch makes it possible not only to solve a problem that bad feeling is given when an air conditioner is switched between an ON state and an OFF state, but also to decrease the weight of the compressor and reduce manufacturing costs.

However, in a conventional clutchless variable capacity swash plate compressor, to prevent freezing of an evaporator by a very small flow rate of refrigerant gas during an OFF time of an air conditioner, it is necessary to provide a complicated suction closing mechanism or discharge closing mechanism to circulate refrigerant gas internally during the OFF time of the air conditioner.

To overcome this problem, a clutchless variable capacity swash plate compressor disclosed in Japanese Laid-Open Patent Publication (Kokai) No. 2000-2180 is configured such that a swash plate is tiltable to a minimum inclination angle of 0°, and that the swash plate is urged in the direction of increasing the length of stroke of pistons using a return spring (stroke spring). This configuration allows pressure within a crankcase to act on the swash plate against the urging force of the return spring during the OFF time of an air conditioner (when a control valve is deenergized), thereby minimizing the inclination angle of the swash plate, which, in cooperation with a check valve provided in a discharge passage, contributes to reducing the flow rate of refrigerant gas to zero. When the air conditioner is turned on, the swash plate is pushed back by the return spring to an inclination angle required for returning to operation, and hence the air conditioner is swiftly switched from the OFF state to the ON state. This mechanism makes it possible to cut wasteful operation for circulating the refrigerant gas during the OFF time of the air conditioner and eliminate the complicated suction closing mechanism.

In the clutchless variable capacity swash plate compressor disclosed in Japanese Laid-Open Patent Publication (Kokai) No. 2000-2180, the inclination angle of the swash plate in an air conditioner OFF-mode operation is determined by a balance between the urging force of the return spring and the pressure within the crankcase. The amount of refrigerant gas for internal circulation increases with an increase in engine rotational speed, so that the pressure within the crankcase rises to decrease the inclination angle of the swash plate. This means that in the air conditioner OFF-mode operation, as the compressor is operated at higher speed, the inclination angle of the swash plate becomes smaller.

On the other hand, as operation speed becomes higher, the amount of heat generated by sliding portions (particularly, a shaft seal) within the compressor increases, which requires lubrication and cooling of the sliding portions. However, since the inclination angle of the swash plate becomes smaller during high-speed operation of the compressor as described hereinabove, the amount of refrigerant gas for internal circulation does not show an increase proportional to an increase in the engine rotational speed. As will be understood from the above, the clutchless variable capacity swash plate compressor disclosed in Japanese Laid-Open Patent Publication (Kokai) No. 2000-2180 has a problem in reliability of the sliding portions.

To solve the above problem, a method can be contemplated in which the minimum inclination angle of the swash plate is set to a fixed angle slightly larger than 0° (e.g. 2 % of the maximum inclination angle) instead of using the return spring, and a discharge check valve having a predetermined valve-opening pressure is disposed in the discharge passage. According to this method, the amount of refrigerant gas for internal circulation can be increased even when the air conditioner is in the OFF state and the compressor is in high-speed operation, and hence it is possible to lubricate and cool the sliding portions sufficiently.

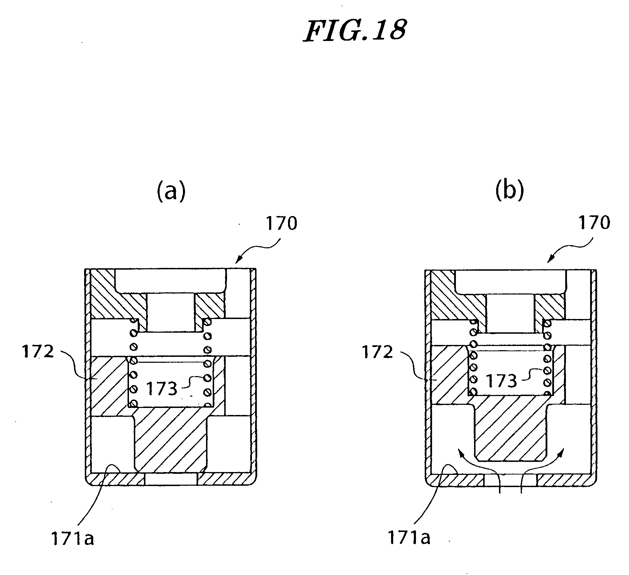

In this case, however, if a discharge check valve 170 of an ordinary type shown in FIG. 18 is used, when its valve-opening pressure is low, the discharge check valve 170 opens before a sufficient amount of refrigerant gas is circulated internally, and hence refrigerant gas flows out toward a condenser.

On the other hand, when the valve-opening pressure of the discharge check valve 170 is high, differential pressure across the discharge check valve becomes small during the ON time of the air conditioner and in low-speed operation of the compressor, and hence the discharge check valve 170 is closed due to the differential pressure yielding to the spring force of a spring 173. When the discharge check valve 170 is closed, pressure is trapped in the compressor, and then the trapped pressure opens the valve. Thus, the opening and closing of the discharge check valve 170 is repeated, which causes discharge pulsation.

Further, even if the flow rate of refrigerant gas is increased to a rather high level, when the lift of a valve element 172 remains small due to influence of the urging force of the spring 173, pressure at a seating surface 171a is reduced due to influence of a dynamic pressure or a restriction effect, and hence the valve element 172 is attracted to the seating surface 171a. As a result, the discharge check valve 170 is closed, whereafter the opening and closing of the discharge check valve 170 is repeated.

An object of the invention is to provide a clutchless variable capacity swash plate compressor which is capable of sufficiently lubricating and cooling sliding portions of the compressor even when an engine performs high-speed rotation during the OFF time of an air conditioner, and suppressing occurrence of chattering of a discharge check valve e.g. when the air conditioner is in the ON state and cooling load is low.

Disclosure of the Invention

To attain the above object, the present invention comprises a compressor as defined in claim 1.

The discharge check valve whose valve-closing pressure is lower than its valve-opening pressure is provided. Therefore, even if the valve-opening pressure is set such that the discharge check valve does not open when the air conditioner is in an OFF state and the engine rotates at high speed, since the valve-closing pressure is lower than the valve-opening pressure, the discharge check valve does not close when the air conditioner is in an ON state and cooling load is small. This makes it possible to prevent chattering of the discharge check valve e.g. when the cooling load is low. Further, since the discharge check valve is provided in the discharge passage, even when the air conditioner is in the OFF state and the engine rotates at high speed, a large amount of refrigerant gas is circulated within the compressor, thereby preventing lubrication and cooling of the sliding portions from becoming insufficient.

Since the casing of the discharge check valve has an overlapping portion, it is possible to prevent the valve element from being attracted due to a dynamic pressure or a restriction effect.

Further options of the compressor of the invention can be found in the dependent claims and the description of the embodiments which follows.

Brief Description of the Drawings

FIG. 1 is a longitudinal cross-sectional view of a clutchless variable capacity swash plate compressor according to a first embodiment of the invention, in its normal operating state;

FIG. 2 is a longitudinal cross-sectional view of the FIG. 1 clutchless variable capacity swash plate compressor in an operating state thereof during an OFF time of an air conditioner;

FIG. 3 illustrates a rear head of the FIG. 1 clutchless variable capacity swash plate compressor, in which FIG. 3(a) is a front end view thereof, and FIG. 3(b) is a cross-sectional view taken on line I-I;

FIG. 4 is an exploded perspective view of a discharge check valve of the FIG. 1 clutchless variable capacity swash plate compressor;

FIGS. 5(a) to 5(d) are cross-sectional views useful in explaining operation of the FIG. 4 discharge check valve;

FIG. 6 is a graph showing the relationship between differential pressure across the FIG. 4 discharge check valve and valve lift of the same;

FIG. 7 is a graph showing the relationship between the valve lift of the FIG. 4 discharge check valve and the cross-sectional area of a passage within the check valve;

FIG. 8 is an exploded perspective view of a discharge check valve provided in a clutchless variable capacity swash plate compressor according to a second embodiment of the invention;

FIG. 9 illustrates a valve element of the FIG. 8 discharge check valve, in which FIG. 9(a) is a plan view thereof, and FIG. 9(b) is a cross-sectional view taken on line II-II;

FIG. 10 is a longitudinal cross-sectional view of a discharge check valve provided in a clutchless variable capacity swash plate compressor according to a third embodiment of the invention;

FIG. 11 illustrates a discharge check valve provided in a clutchless variable capacity swash plate compressor according to a fourth embodiment of the invention, in which FIG. 11(a) is a plan view of a valve element; FIG. 11(b) is a cross-sectional view take on line III-III; FIG. 11(c) is a plan view of a stopper; FIG. 11(d) is a cross-sectional view take on line IV-IV; FIG. 11(e) is a cross-sectional view of a casing; and FIG. 11(F) is a cross-sectional view of the discharge check valve;

FIG. 12 illustrates a discharge check valve provided in a clutchless variable capacity swash plate compressor according to a fifth embodiment of the invention, in which. FIG. 12(a) is a longitudinal cross-sectional view of the discharge check valve in its closed state, and FIG. 12(b) is a longitudinal cross-sectional view of the discharge check valve in its open state;

FIG. 13 is an exploded perspective view of a discharge check valve provided in a clutchless variable capacity swash plate compressor according to a sixth embodiment of the invention;

FIG. 14 is a perspective view of a casing appearing in FIG. 13, as viewed from rear;

FIGS. 15(a) to 15(d) are cross-sectional views useful in explaining operation of the FIG. 13 discharge check valve;

FIG. 16 is an exploded perspective view of a discharge check valve provided in a clutchless variable capacity swash plate compressor according to a seventh embodiment of the invention;

FIG. 17 illustrates the FIG. 16 discharge check valve, in which FIG. 17(a) is a longitudinal cross-sectional view of the discharge check valve in its closed state, and FIG. 17(b) is a longitudinal cross-sectional view of the discharge check valve in its open state; and

FIG. 18 illustrates a discharge check valve provided in a conventional clutchless variable capacity swash plate compressor, in which FIG. 18(a) is a longitudinal cross-sectional view of the discharge check valve in its closed state, and FIG. 18(b) is a longitudinal cross-sectional view of the discharge check valve in its open state.

Best Mode for Carrying Out the Invention

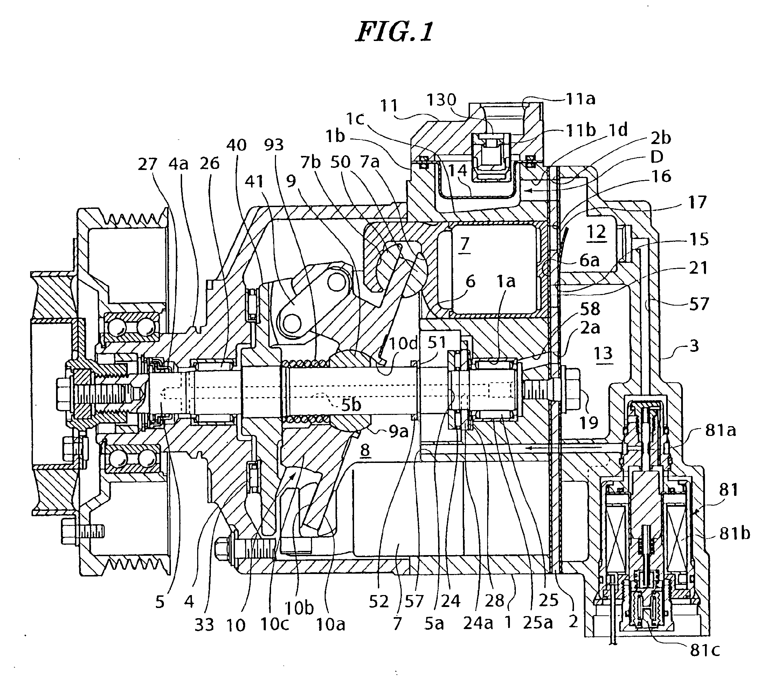

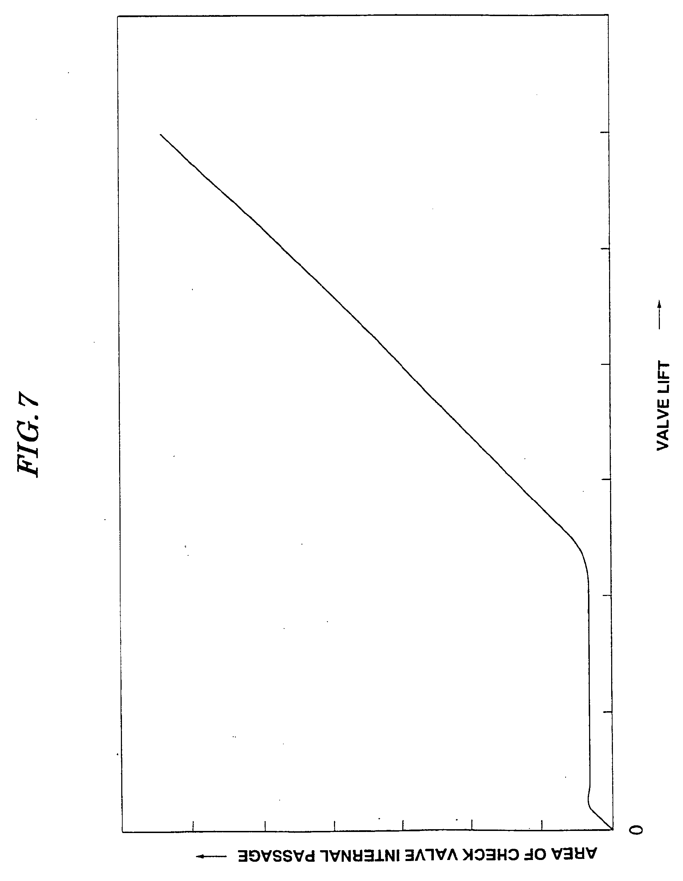

Hereafter, a first embodiment of the present invention will be described with reference to FIGS. 1 to 7.

This compressor has a cylinder block 1 having one end face thereof secured to a rear head 3 via a valve plate 2 and the other end face thereof secured to a front head 4.

The cylinder block 1 has a plurality of cylinder bores 6 axially extending therethrough at predetermined circumferential intervals about the shaft 5. Each cylinder bore 6 has a piston 7 slidably received therein.

The front head 4 defines therein a crankcase 8 in which a swash plate 10 is received. The front head 4 has a boss 4a projecting from a central portion thereof. A radial bearing 26 and a shaft seal 27 are received in the boss 4a.

The swash plate 10 is slidably and tiltably mounted on the shaft 5 via a hinge ball 9.

A boss 10c of the swash plate 10 has a central through hole thereof formed with a hinge ball-receiving surface 10d corresponding to a spherical surface 9a of the hinge ball 9.

The spherical surface 9a of the hinge ball 9 is fitted in the central through hole of the boss 10c in a manner slidable on the hinge ball-receiving surface 10d.

Further, the swash plate 10 is connected to pistons 7 via shoes 50. The shoes 50 are supported in concave portions 7a, 7b in a manner relatively rotatable with respect to opposite end faces 10a, 10b of the swash plate 10.

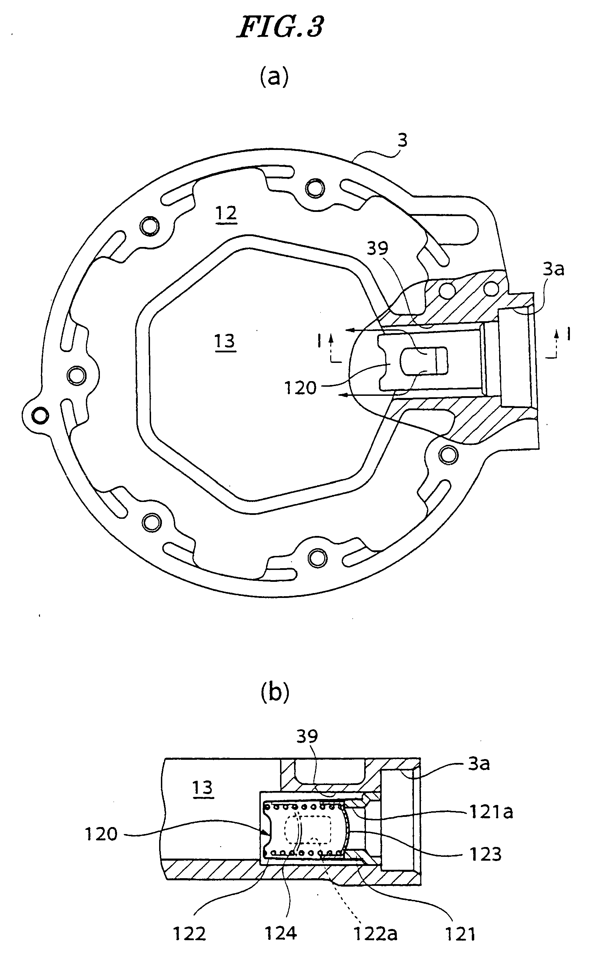

The rear head 3 defines a discharge chamber 12 and a suction chamber 13 therein. The discharge chamber 12 is arranged such that it surrounds the discharge chamber 12 (see FIG. 3). Further, the rear head 3 is formed with a suction port 3a for communication with an evaporator (not shown).

Refrigerant gas in the suction port 3a is guided into the suction chamber 13 via a suction passage 39 formed in the rear head 3. In the suction passage 39, there is provided a suction check valve 120.

The suction check valve 120 is comprised of a valve seat 121, a casing 122, a valve element 123, and a spring 124.

The valve seat 121 is formed with a through hole 121a. The casing 122 is in the form of a bottomed hollow cylinder, and has the valve seat 121 fitted in an open end thereof. Further, the casing 122 is formed with a window hole 122a. The valve element 123 is received in the casing 122 in a manner slidable along a direction of depth of the casing 122. The window hole 122a is opened and closed by this sliding motion of the valve element 123 as illustrated in FIG. 3(b). The spring 124 is received within the casing 122, and urges the valve element 123 toward the valve seat 121.

A control valve 81 is disposed in an intermediate portion of an air supply passage 57 communicating between the discharge chamber 12 and the crankcase 8. The control valve 81 is comprised of a valve portion 81a, a solenoid 81b, and a bellows 81c. The bellows 81c expands when suction pressure is lowered, to thereby move the valve portion 81a in the direction of opening the air supply passage 57. The solenoid 81b urges the valve portion 81c in the direction of closing the air supply passage 57 when an electric current supplied from a control logic on the vehicle side is increased.

In short, when thermal load is low, the control valve 81 opens the air supply passage 57, whereas when the thermal load is high, the control valve 81 closes the same.

The suction chamber 13 and the crankcase 8 are in communication with each other via a central hole 1a and a passage 58 formed in the cylinder block 1, and an orifice 2a formed through the valve plate 2.

The valve plate 2 is formed with refrigerant outlet ports 16 for communicating between compression chambers 6a and the discharge chamber 12, and refrigerant inlet ports 15 for communicating between the compression chambers 6a and the suction chamber 13. The refrigerant outlet ports 16 and the refrigerant inlet ports 15 are arranged at predetermined circumferential intervals.

The refrigerant outlet ports 16 are opened and closed by respective discharge valves 17, and the discharge valves 17 are fixed to a rear end face of the valve plate 2 by a bolt 19.

On the other hand, the refrigerant inlet ports 15 are opened and closed by respective suction valves 21, and the suction valves are disposed between the valve plate 2 and the cylinder block 1.

The front end portion of the shaft 5 is rotatably supported by a radial bearing 26. A gap between the outer peripheral portion of the front end portion of the shaft 5 and the boss 4a is sealed by a shaft seal 27. The shaft 5 has a rear end portion thereof formed with a stepped surface 5a on which a thrust bearing 24 is fitted. On a rear end face of the thrust bearing 24, there is disposed a coned disk spring 28. In this state, the rear end portion of the shaft 5 is inserted into a radial bearing 25 fitted in the central hole 1a of the cylinder block 1. Thus, the rear end portion of the shaft 5 is supported by the thrust bearing 24 and the radial bearing 25. When the rear end portion of the shaft 5 is inserted into the radial bearing 25, the coned disk spring 28 is bent by a predetermined amount by a thrust rail 24a of the thrust bearing 24 and an outer ring 25a of the radial bearing 25. This applies a load to the shaft 5, which presses the shaft 5 toward the front head, thereby preventing looseness of the shaft 5 in the axial direction.

The shaft 5 is formed with a passage 5b. The passage 5b communicates between a bearing-receiving space of the boss 4a and the central hole 1a of the cylinder bore 1. Thus, the compression chamber 6a, the refrigerant outlet port 16, the air supply passage 57, the crankcase 8, the bearing-receiving space of the boss 4a, the passage 5b, the passage 58, and the orifice 2a form an internal circulation passage. This internal circulation passage causes refrigerant gas to circulate within a housing of the compressor when the inclination angle of the swash plate 10 is the minimum or close to the minimum, thereby lubricating and cooling sliding portions of the compressor.

The shaft 5 has a thrust flange 40 fixed thereon for transmitting rotation of the shaft 5 to the swash plate 10. The thrust flange 40 is supported on the inner wall of the front head 4 via a thrust bearing 33.

The thrust flange 40 and the swash plate 10 are connected with each other via a linkage 41, whereby the swash plate 10 can tilt with respect to an imaginary plane perpendicular to the shaft 5.

Between the thrust flange 40 and the hinge ball 9, there is interposed a destroke spring 93 mounted on the outer peripheral surface of the shaft 5.

On the shaft 5, there is mounted a snap ring (inclination angle-limiting member) 51 for receiving the hinge ball 9 to thereby determine a minimum inclination angle of the swash plate 10. A spacer (inclination angle-adjusting member) 52 for adjusting the minimum inclination angle of the swash plate 10 is disposed on the hinge ball-side end face of the snap ring 51. The spacer 52 is selected from a plurality of spacers 52 during assembly of the compressor, and used so as to accommodate variations among component parts, whereby the minimum inclination angle of the swash plate 10 is adjusted and controlled to a predetermined value.

On the outer peripheral surface of the cylinder block 1, there is formed a hollow cylindrical portion 1b in which a discharge space chamber 1c is defined. The discharge space chamber 1c communicates with the discharge chamber 12 via a passage 1d formed in the hollow cylindrical portion 1b and a through hole 2b formed through the valve plate 2. Within the discharge space chamber 1c, a baffle plate 14 is received in a manner covering the face of opening of the hollow cylindrical portion 1b. The baffle plate 14 is formed with through holes (not shown) each having a predetermined size, and the through holes attenuate discharge pulsation.

The hollow cylindrical portion 1c has a cover 11 mounted thereon via the baffle plate 14. The cover 11 is formed with a discharge port 11a and a valve-receiving hole 11b.

The through hole 2b, the passage 1d, the discharge space chamber 1c, the valve-receiving hole 11b, and the discharge port 11a form a discharge passage D via which refrigerant gas delivered from the compression chamber 6a to the discharge chamber 12 is sent out of the compressor.

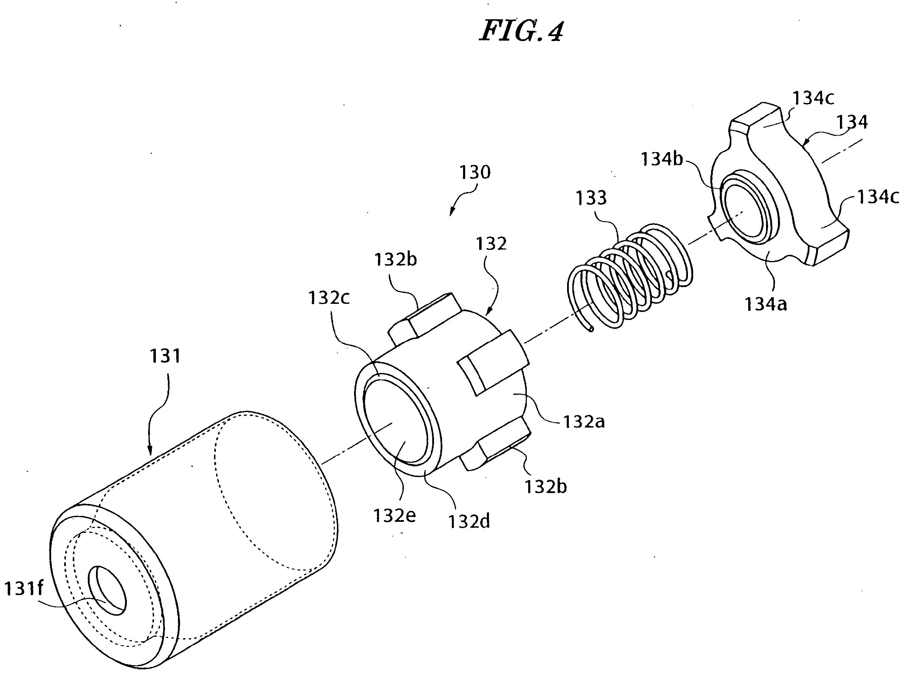

The valve-receiving hole 11b thus forming part of the discharge passage D has a discharge check valve 130 received therein. The discharge check valve 130 is comprised of a casing 131, a valve element 132, a spring 133, and a stopper 134, as shown in FIG. 4.

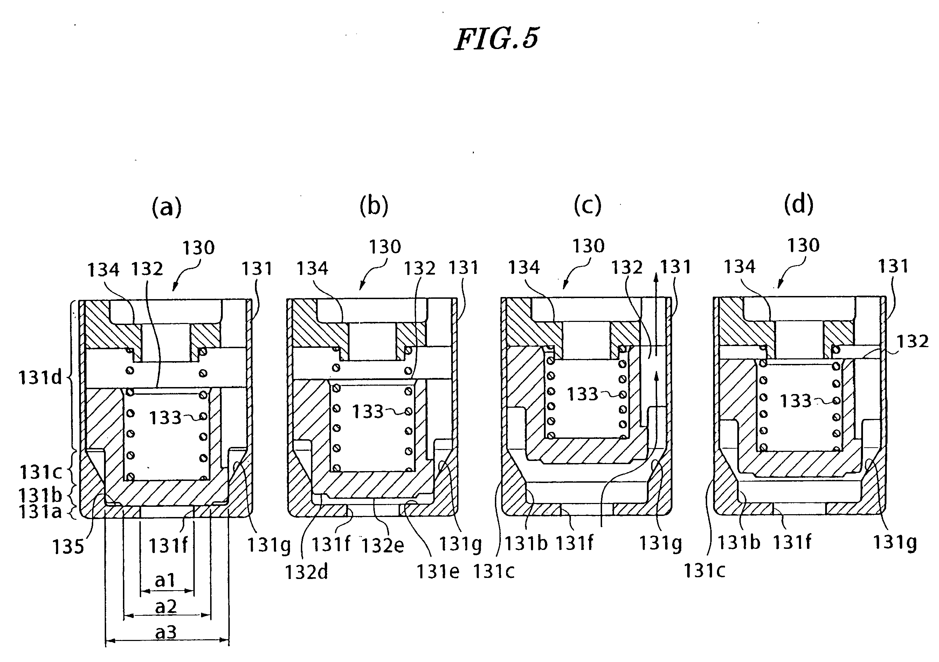

The casing 131 is in the form of a bottomed hollow cylinder. As shown in FIG. 5, the casing 131 is comprised of a bottom portion 131a, an overlapping portion 131b, a lift portion 131c, and a hollow cylindrical portion 131d. The bottom potion 131a has a first seating surface 131e and a circular through hole 131f formed in the central portion of the first seating surface 131e. The overlapping portion 131b is formed in a manner continuous with the bottom portion 131a, and an end of the valve element 132 is fitted in the overlapping portion 131b over a predetermined length in the direction of depth of the casing 131. The lift portion 131c is formed in a manner continuous with the overlapping portion 131b, and has a tapered surface 131g that cooperates with the end of the valve element 132 to restrict the flow of refrigerant gas. The tapered surface 131g expands as the distance from the first seating surface 131e increases. The hollow cylindrical portion 131d is formed in a manner continuous with the lift portion 131c, for guiding the valve element 132 along the direction of depth of the casing 131.

The valve element 132 is received in the casing 131 in a manner slidable within the casing 131 in the direction of depth of the casing 131. The valve element 132 is comprised of a body 132a and a plurality of block portions 132b. The body 132a has an end formed with a protrusion 132c and a stepped surface 132d surrounding the protrusion 132c. The protrusion 132c has an end surface, which forms a second seating surface 132e. The second seating surface 132e comes into contact with and moves away from the first seating surface 131e to thereby open and close the through hole 131f. The block portions 132b are arranged on the outer peripheral surface of the body 132a at predetermined circumferential intervals. The block portions 132b axially slide on the inner peripheral surface of the hollow cylindrical portion 131d of the casing 131, whereby the valve element 132 slides within the casing 131. Further, between the block portions 132b are formed gas passages through which refrigerant gas flowing into the casing 131 via the through hole 131f is caused to flow downstream from the valve element 132.

The spring 133 is disposed within the casing 131, for urging the valve element 132 toward the bottom portion 131a of the casing 131.

The stopper 134 is fixed in the casing 131, for limiting the motion of the valve element 132. The stopper 134 is comprised of a body 134a, a holding portion 134, and a plurality of leg portions 134c. The body 134a is generally in the form of a ring. The holding portion 134b is in the form of a ring and formed on an end face of the body 134a. The spring 133 is held by the holding portion 134b. The leg portions 134c are provided on the outer peripheral surface of the body 134a at predetermined circumferential intervals. The leg portions 134c are fixedly secured on the inner peripheral surface of the hollow cylindrical portion 131d of the casing 131, whereby the stopper 134 is fixed in the casing 131.

Next, the operation of this clutchless variable swash plate compressor will be described.

The control valve 81 has a predetermined electric current supplied thereto which is determined by the control logic on the vehicle side. When the suction pressure becomes lower than a pressure determined according to the electric current, the bellows 81c of the control valve 81 expands, whereby the valve portion 81a moves in the direction of opening the air supply passage 57. When the air supply passage 57 opens, high-pressure refrigerant gas is introduced from the discharge chamber 12 into the crankcase 8 to increase pressure within the crankcase 8. As a result, the inclination angle of the swash plate 10 decreases, whereby the length of stroke of the piston 7 is decreased. When the length of stroke of the piston 7 is decreased, the suction pressure rises, and hence after all, the length of stroke of the piston 7 is controlled to make the suction pressure of the compressor equal to a predetermined level, regardless of the rotational speed and operating condition of the engine. When the electric current is increased, the solenoid 81b urges the valve element 81a in the valve-closing direction, so that unless the suction pressure becomes equal to or lower than a lower level, the air supply passage 57 is not opened. Thus, the length of stroke of the piston 7 is controlled to maintain the lower suction pressure. Refrigerant gas delivered to the discharge chamber 12 flows from the discharge chamber 12 to the discharge space chamber 1c formed in the upper portion of the cylinder block 1, via the through hole 2b formed through the valve plate 2 and the passage 1d formed in the cylinder block 1.

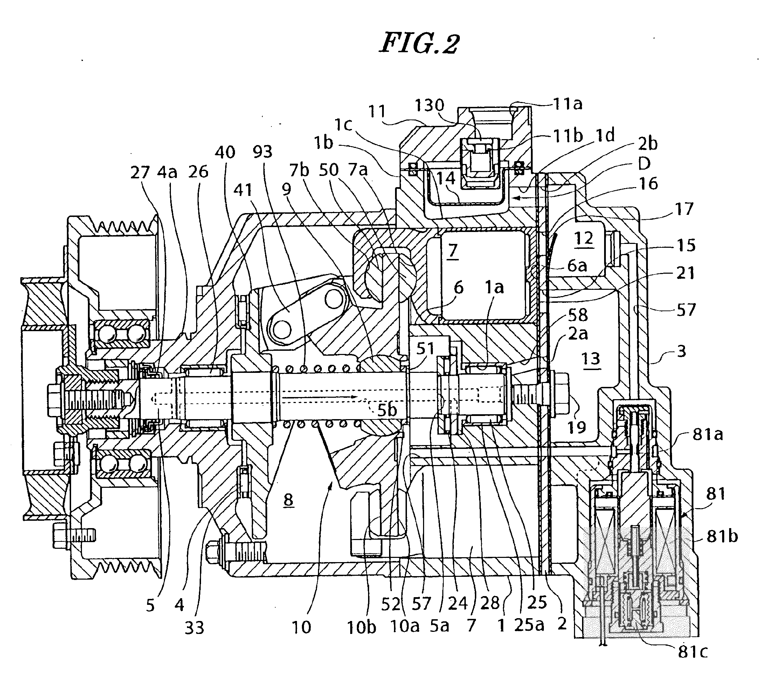

FIG. 2 shows a state of the compressor in an OFF mode operation. When energization of the control valve 81 is stopped by the control logic of the vehicle, through the action of an opening spring (not shown) of the control valve 81, the valve portion 81a is opened regardless of the suction pressure and discharge pressure. This causes the air supply passage 57 to be opened to sharply increase the pressure within the crankcase, whereby the inclination angle of the swash plate 10 is changed to a minimum inclination angle. The minimum inclination angle of the swash plate 10 is set to a value equal to or larger than zero (e.g. 1 to 2 % of a maximum inclination angle). When the inclination angle of the swash plate 10 is changed to the minimum inclination angle, the discharge flow rate is sharply reduced, which lowers pressure within the discharge chamber 12. However, on a system side (on the side of a condenser (not shown)), there is a large amount of discharged refrigerant gas, which prevents pressure therein from being lowered. As a result, a discharge chamber-side discharge pressure (Pdc) becomes lower than a system-side discharge pressure (Pds). The discharge check valve 130 is closed by differential pressure thereacross to prevent reverse flow of refrigerant gas. Refrigerant gas compressed at the minimum inclination angle returns from the control valve 81 to the suction chamber 13 via the crankcase 8 and the orifice 2a formed through the valve plate 2, to perform internal circulation. This stops the flow of refrigerant gas to the system, reducing differential pressure across the suction check valve 120 provided in the suction passage 39 to zero, whereby the suction check valve 120 is closed.

Next, the operation of the discharge check valve 130 will be described with reference to FIG. 5. It should be noted that the area of a circle having a diameter of a1 is represented by A1, the area of a circle having a diameter of a2 by A2, and the area of a circle having a diameter of a3 by A3.

FIG. 5(a) shows a closed state of the discharge check valve 130. When the discharge check valve 130 is closed, the discharge chamber-side discharge pressure (Pdc) acts on a portion of the valve element 132 blocking the through hole 131f of the second seating surface 132e. Between the first seating surface 131e of the casing 131 and the stepped surface 132d of the valve element 132, there is formed a space 135. The system-side discharge pressure (Pds) flows into this space 135 through a clearance between the valve element 132 and the overlapping portion 131b, so that the pressure within the space 135 becomes equal to the system-side discharge pressure (Pds). Therefore, the stepped surface 132d (having an area of A3 - A2) of the valve element 132 receives the system-side discharge pressure (Pds). A pressure gradient from the discharge chamber-side discharge pressure (Pdc) to the system-side discharge pressure (Pds) is created on a portion (having an area of A2 - A1) of the second seating surface 132e radially outward of the through hole 131f, so that the portion of the second seating surface 132e receives a pressure of approximately (Pdc + Pds)/2. The upper face (having an area of A3) of the valve element 132 receives the system-side discharge pressure (Pds), and the system-side discharge pressure (Pds) and the spring load of the spring 133 press the valve element 132 in the valve-closing direction. In short, the opening of the discharge check valve 130 is defined as:

$$A1 \ x \ Pdc + (A2 - A1)(Pdc + Pds)/2 + (A3 - A2) \ Pds$$

$$> A3 \ x \ Pds + Fspring$$

(Fspring: spring load of the spring 133 applied during closing of the valve).

FIG. 5(b) shows a state immediately after the valve is opened. The first seating surface 131e of the casing 131 is opened, whereby the through hole 131f is opened. However, since the overlapping portion 131b is not yet open, refrigerant gas is only allowed to leak into the system. In other words, the discharge check valve 130 is practically not open. The discharge chamber-side discharge pressure (Pdc) acts on the second seating surface 132e and the stepped surface 132d of the valve element 132 to increase the area receiving the discharge chamber-side discharge pressure (Pdc), causing the force for opening the discharge check valve 130 to be increased and eventually overcome the spring load of the spring 133, whereby the discharge check valve 130 transits to the open state.

FIG. 5(c) shows a fully open state of the discharge check valve 130. The overlapping portion 131b is opened, whereby refrigerant gas is delivered to the system side. In this case, since the lift portion 131c has the conical tapered surface 131g, the refrigerant gas flows swiftly without being disturbed. The lift of the valve element 132 is determined at a balance point determined according to differential pressure across the valve element 132 and the bending amount of the spring 133. More specifically, the valve element 132 is balanced at a lift $\delta$ obtained from the following equation:

$$A3 \ x \ Pdc = A3 \ x \ Pds + Fspring + k \delta$$

which is transformed into:

$$\delta = \{A3 \ x \ (Pdc - Pds) - Fspring\}/k$$

(k: spring constant) The spring constant is set to a value smaller than the pressure load, so that during normal operation, the discharge check valve 130 is open to a full lift (fully opened) state.

FIG. 5(d) shows a state of the discharge check valve 130 in a very low-flow rate condition. When the flow rate is low, the differential pressure (Pdc - Pds) across the valve element 132 is small, which sometimes makes it impossible to hold the valve element 132 in the fully open state against the spring load of the spring 133. However, as the lift of the valve element 132 becomes smaller, a passage between the end of the valve element 132 and the lift portion 131c becomes narrower, which increases the differential pressure. This increased differential pressure inhibits the valve element 132 from moving downward from the lift portion 131c, whereby a lift equal to or larger than a predetermined amount is maintained. Thus, chattering under the low-flow rate condition can be prevented.

Next, advantageous effects of the present embodiment will be described.

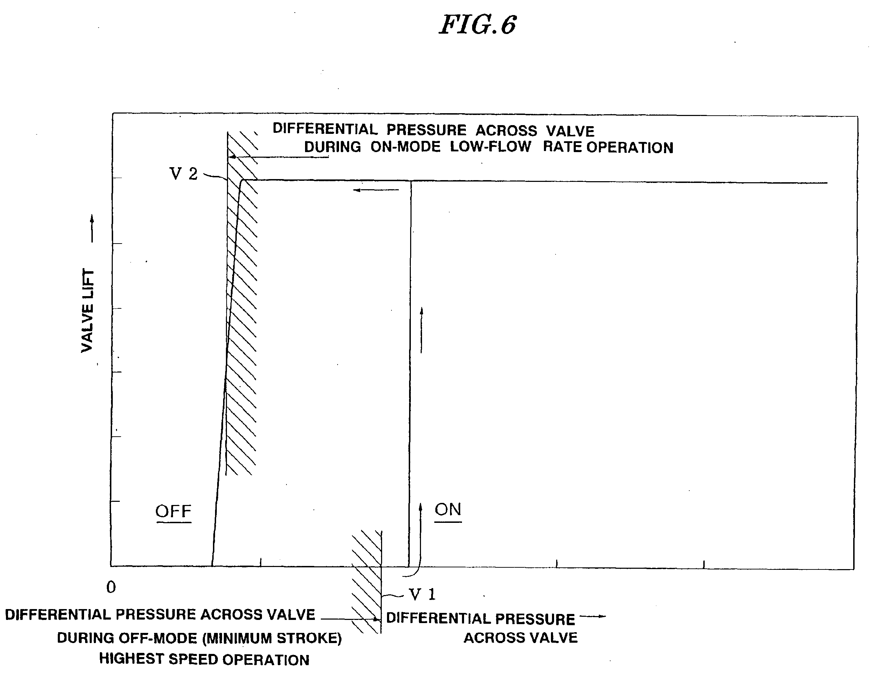

In the present embodiment, as shown in FIG. 6, the discharge check valve 130 whose valve-closing pressure is lower than its valve-opening pressure is provided. Therefore, even if the valve-opening pressure is set such that the discharge check valve 130 cannot open when the air conditioner is in an OFF state and the engine rotates at high speed, since the valve-closing pressure is lower than the valve-opening pressure, the discharge check valve 130 does not close when the air conditioner is in an ON state and cooling load is small. This makes it possible to prevent chattering of the discharge check valve 130 in the low-flow rate condition. Further, since the discharge check valve 130 is provided in the discharge passage D, even when the air conditioner is in the OFF state and the engine rotates at high speed, the amount of refrigerant gas internally circulated within the compressor is significant, which prevents insufficient lubrication and cooling of the sliding portions.

Moreover, in the present embodiment, since the casing 131 of the discharge check valve 130 has the overlapping portion 131b, the lift of the valve element 132 is increased, causing the distance between valve element 132 and the first seating surface 131e to be increased, so that it is possible to prevent occurrence of a phenomenon that the valve element 132 is attracted to the first seating surface 131e due to a dynamic pressure or a restriction effect. Further, since the valve element 132 is formed with the stepped surface 132d surrounding the second seating surface 132e, it is possible to set the valve-opening pressure and the valve-closing pressure, as desired, by changing the ratio between the area of the second seating surface 132e and that of the stepped 132d surface. Thus, the valve-opening pressure and the valve-closing pressure can be configured with ease.

When viewed from another angle, as is clear from FIG. 6, the discharge check valve 130 is a valve that opens the discharge passage D when the difference between the pressure on the upstream side of the valve element 132 and that on the downstream side of the same exceeds a first predetermined value V1, and closes the discharge passage D when the difference between the pressure on the upstream side of the valve element 132 and that on the downstream side of the same becomes smaller than a second predetermined value V2 smaller than the first predetermined value V1, and includes opening/closing control means for carrying out the operation.

In the present embodiment, the opening/closing control means is comprised of valve opening-delaying means and valve closing-delaying means. The valve opening-delaying means is formed by the first seating surface 131e formed on one end of the casing 131, the through hole 131f formed through the first seating surface 131e, and the second seating surface 132e formed on the valve element 132 in a manner opposed to the through hole 131f. The second seating surface 132e is smaller in area than the first seating surface 131e, and larger in area than the through hole 131f. The valve closing-delaying means is formed by the first seating surface 131e formed on the one end of the casing 131, the through hole 131f formed through the first seating surface 131e, and the overlapping portion 131b formed in the casing 131 such that the overlapping portion 131b surrounds the first seating surface 131e and the end of the valve element 132 is fitted therein in the direction of depth of the casing 131.

The opening/closing control means may be comprised of either of the valve opening-delaying means and the valve closing-delaying means. Further, the opening/closing control means is not limited to these examples, but various forms thereof are possible, including one using a magnet.

Furthermore, although in the above embodiment, the hollow cylindrical portion 131d is formed continuous with the overlapping portion 131b via the lift portion 131c, the hollow cylindrical portion 131d may be formed directly continuous with the overlapping portion 131b.

As a variation of the present embodiment, the valve seat portion (the bottom portion 131a, the overlapping portion 131b, and the lift portion 131c) of the casing 131 and the hollow cylindrical portion 131d of the same may be made separate from each other, and the hollow cylindrical portion 131d may be integrally formed with the stopper 134.

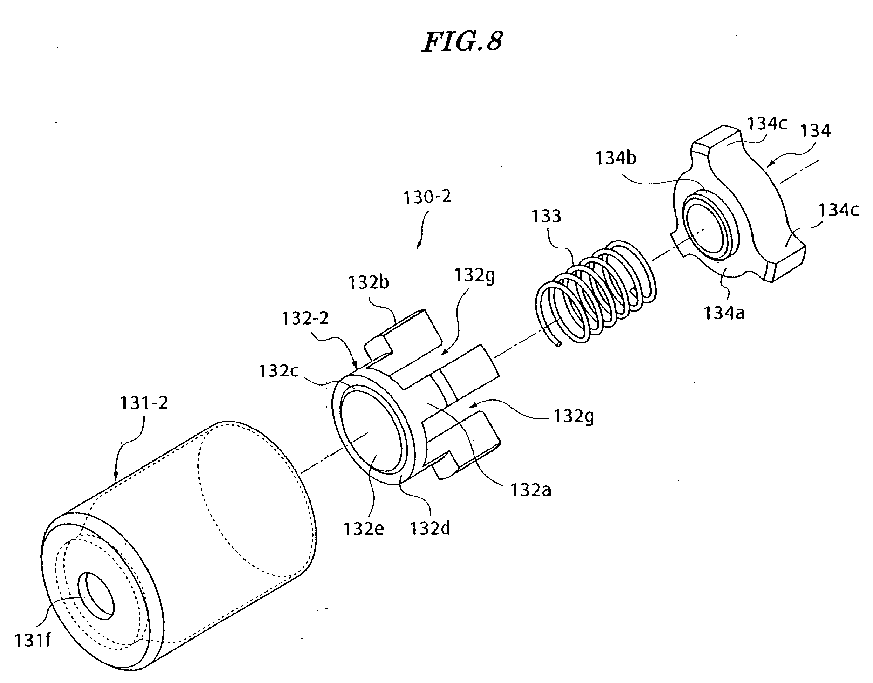

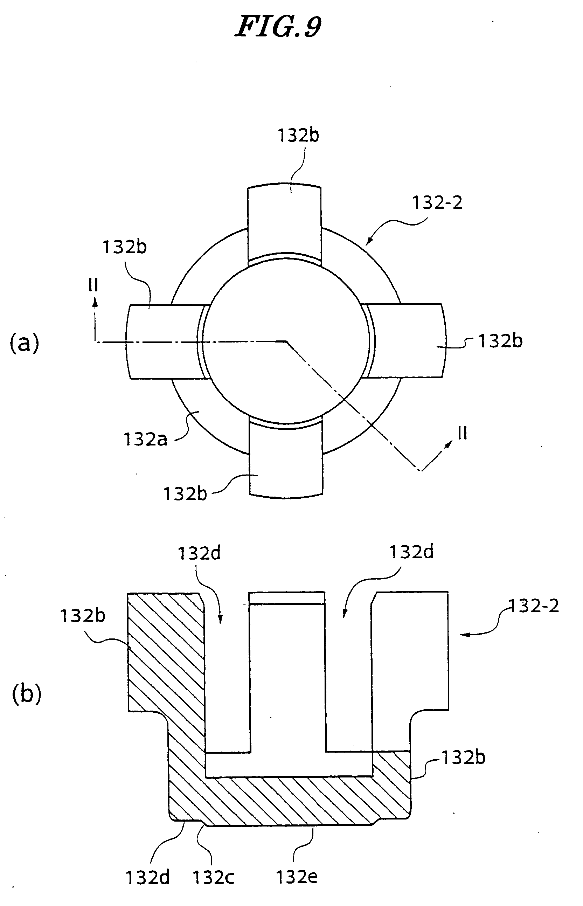

FIG. 8 is an exploded perspective view of a discharge check valve provided in a clutchless variable capacity swash plate compressor according to a second embodiment of the present invention, and FIG. 9 illustrates a valve element of the FIG. 8 discharge check valve, in which FIG. 9(a) is a plan view thereof, and FIG. 9(b) is a cross-sectional view taken on line II-II.

The discharge check valve 130-2 is generally similar in construction to the discharge check valve shown in FIG. 4. Therefore, component parts and elements corresponding to those of the FIG. 4 discharge check valve are designated by identical reference numerals, and description thereof is omitted. In the following, a description will be given of only differences in construction from the FIG. 4 discharge check valve.

Further, component parts and elements other than the discharge check valve 130-2 are identical to those of the first embodiment, and hence description thereof is omitted

A valve element 132-2 of the discharge check valve 130-2 has an outer peripheral surface thereof formed with cutouts 132g. Flow passage resistance offered when the valve is open is reduced by these cutouts 132g. The operation of the discharge check valve 130-2 is identical to that of the FIG. 4 discharge check valve.

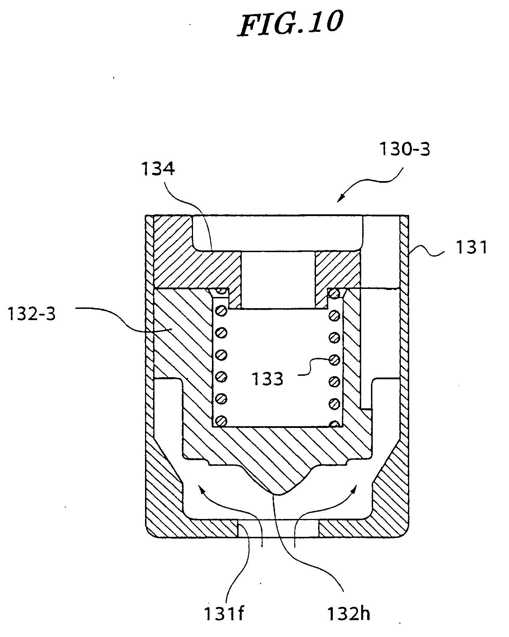

FIG. 10 is a longitudinal cross-sectional view of a discharge check valve provided in a clutchless variable capacity swash plate compressor according to a third embodiment of the present invention.

The discharge check valve 130-3 is generally similar in construction to the discharge check valve shown in FIG. 4. Therefore, component parts and elements corresponding to those of the FIG. 4 discharge check valve are designated by identical reference numerals, and description thereof is omitted. In the following, a description will be given of only differences in construction from the FIG. 4 discharge check valve.

Further, component parts and elements other than the discharge check valve 130-3 are identical to those of the first embodiment, and hence description thereof is omitted

A valve element 132-3 of the discharge check valve 130-3 has an end formed with a projection 132h having a generally conical shape. The projection 132h serves to make smooth the flow in the neighborhood of the through hole 131f and reduce flow passage resistance when the valve is open. The operation of the discharge check valve 130-3 is identical to that of the FIG. 4 discharge check valve.

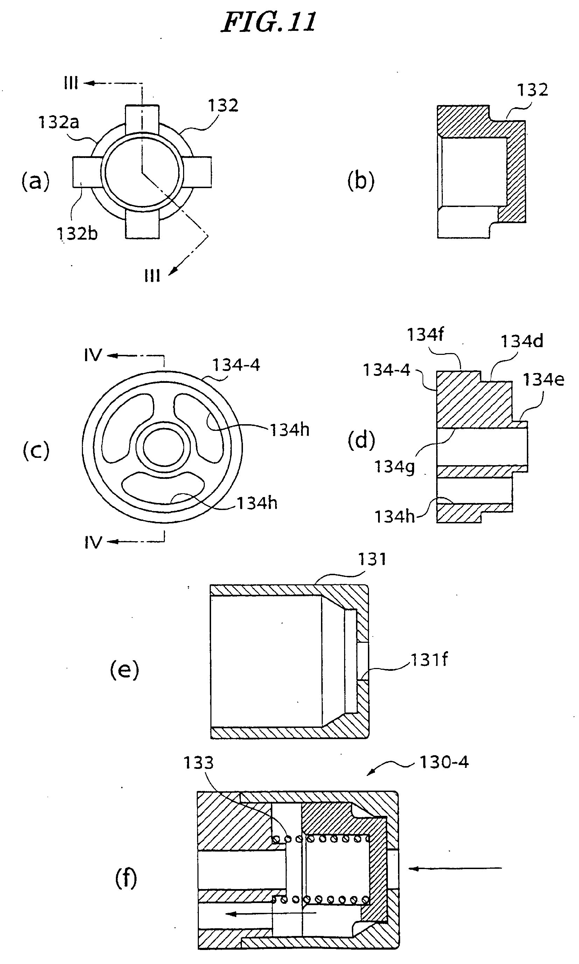

FIG. 11 illustrates a discharge check valve provided in a clutchless variable capacity swash plate compressor according to a fourth embodiment of the present invention, in which FIG. 11(a) is a plan view of a valve element; FIG. 11(b) is a cross-sectional view taken on line III-III; FIG. 11(c) is a plan view of a stopper; FIG. 11(d) is a cross-sectional view taken on line IV-IV; FIG. 11(e) is a cross-sectional view of a casing; and FIG. 11(f) is a cross-sectional view of the discharge check valve.

The discharge check valve 130-4 of the present embodiment is generally similar in construction to the discharge check valve shown in FIG. 4. Therefore, component parts and elements corresponding to those of the FIG. 4 discharge check valve are designated by identical reference numerals, and description thereof is omitted. In the following, a description will be given of only differences in construction from the FIG. 4 discharge check valve.

Further, component parts and elements other than the discharge check valve 130-4 are identical to those of the first embodiment, and hence description thereof is omitted.

The stopper 134-4 of the discharge check valve 130-4 is comprised of a fitting portion 134d, a holding portion 134e, a press-fitted portion 134f, a central through hole 134g, and a communication hole 134h. The fitting portion 134d is fitted in the upper end of the casing 131. The holding portion 134e holds a spring 133. The press-fitted portion 134f is press-fitted into the valve-receiving hole 11b formed in the rear head 3. More specifically, in the FIG. 4 discharge check valve, the casing 131 is press-fitted into the valve-receiving hole 11b, whereas in the discharge check valve 130-4, only the press-fitted portion 134f is press-fitted into the valve-receiving hole 11b. The operation of the discharge check valve 130-4 is identical to that of the FIG. 4 discharge check valve.

According to the fourth embodiment, it is possible to obtain the same advantageous effects as provided by the first embodiment, and prevent distortion of the casing 131.

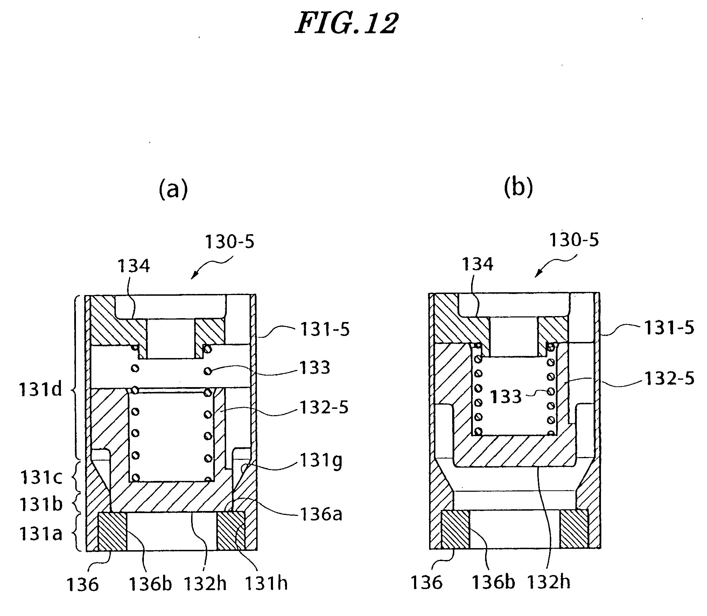

FIG. 12 illustrates a discharge check valve provided in a clutchless variable capacity swash plate compressor according to a fifth embodiment of the present invention, in which FIG. 12(a) is a longitudinal cross-sectional view of the discharge check valve in its closed state, and FIG. 12(b) is a cross-sectional view of the same in its open state.

The discharge check valve 130-5 has almost the same construction as that of the discharge check valve shown in FIG. 4. Therefore, component parts and elements corresponding to those of the FIG. 4 discharge check valve are designated by identical reference numerals, and description thereof is omitted. In the following, a description will be given of only differences in construction from the FIG. 4 discharge check valve.

Further, component parts and elements other than the discharge check valve 130-5 are identical to those of the first embodiment, and hence description thereof is omitted.

A casing 131-5 is formed of a nonmagnetic material. The casing 131-5 has a bottom portion 131a formed with a receiving hole 131h in which a permanent magnet 136 is received. This permanent magnet 136 is in the form of a ring, and has an upper end face, which forms a first seating surface 136a. Further, the permanent magnet 136 has a central portion thereof formed with a through hole 136b.

A valve element 132-5 is formed of a magnetic material. The valve element 132-5 has an end face, which forms a second seating surface 132h, and the through hole 136b is opened and closed by the second seating surface 132h.

The attractive force of a magnet for attracting an object is inversely proportional to the square of the distance between the magnet and the object, and hence once the valve element 132-5 has been attracted to the first seating surface 136a of the permanent magnet 136, the magnetic force of the permanent magnet 136 makes the valve element 132-5 difficult to be moved away from the first seating surface 136a, which makes the through hole 136b difficult to open. On the other hand, once the valve element 132-5 has been moved away from the bottom portion 131a of the casing 131-5, the magnetic force hardly acts on the valve element 132-5, which makes the through hole 136b difficult to close.

According to the above fifth embodiment, it is possible to obtain the same advantageous effects as provided by the first embodiment, and increase hysteresis between the valve-closing pressure and the valve-opening pressure. Further, when the hysteresis is set to a normal level, the through hole 136b can be made large, thereby reducing discharge resistance.

It should be noted that as a variation of the fifth embodiment, the end of the valve element 132-5 may be formed by a magnet, and the bottom portion 131a of the casing 131-5 may be formed of a magnetic material or by an attraction member, such as a magnet opposite in polarity.

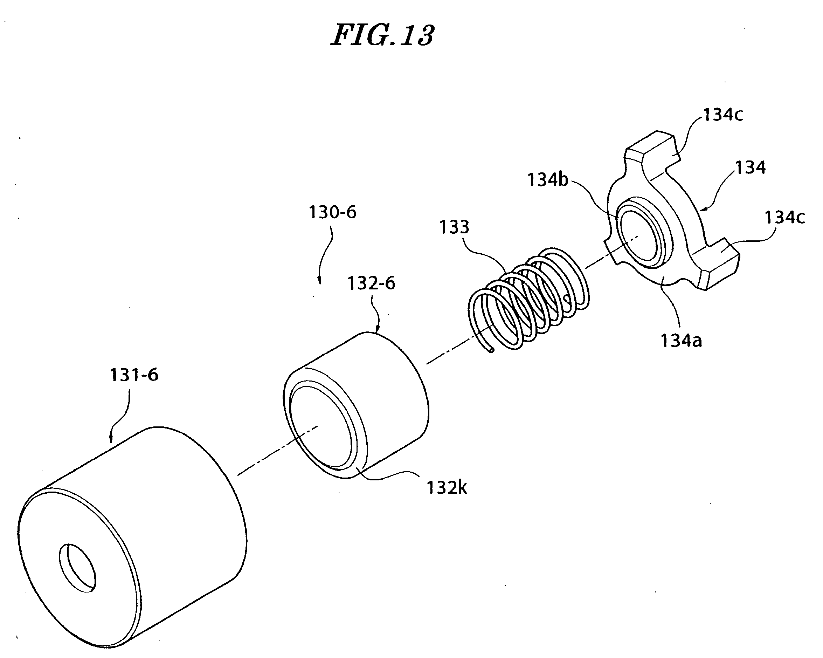

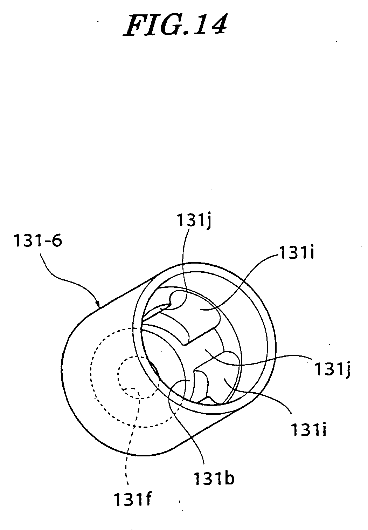

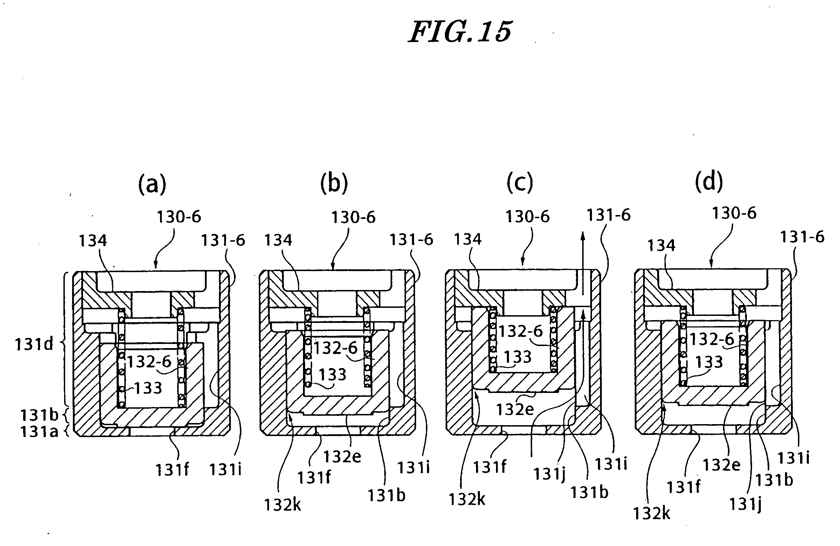

FIG. 13 is an exploded perspective view of a discharge check valve provided in a clutchless variable capacity swash plate compressor according to a sixth embodiment of the present invention. FIG. 14 is a perspective view of a casing appearing in FIG. 13, as viewed from rear. FIGS. 15(a) to 15(d) are cross-sectional views useful in explaining the operation of the FIG. 13 discharge check valve.

The discharge check valve 130-6 is generally similar in construction to the discharge check valve shown in FIG. 4. Therefore, component parts and elements corresponding to those of the FIG. 4 discharge check valve are designated by identical reference numerals, and description thereof is omitted. In the following, a description will be given of only differences in construction from the FIG. 4 discharge check valve.

Further, component parts and elements other than the discharge check valve 130-6 are identical to those of the first embodiment, and hence description thereof is omitted.

While the FIG. 4 discharge check valve 130 has the block portions 132b formed on the outer peripheral surface of the valve element 132, a valve element 132-6 of the discharge check valve 130-6 has nothing formed on an outer peripheral surface thereof, and the outer peripheral surface of the valve element 132-6 is in slidable contact with the inner peripheral surface of the hollow cylindrical portion (guide portion) 131d of the casing 131-6. For this reason, the discharge check valve 130-6 requires a passage which allows refrigerant gas having flowed into the casing 131-6 via the through hole 131f to flow downstream from the valve element 132-6. Therefore, on the inner peripheral surface of the hollow cylindrical portion 131d of the casing 131-6, there are formed a plurality of gas passages 131i at predetermined circumferential intervals. An inner peripheral surface 131j between the gas passages 131i is on the same plane as the inner peripheral surface of the overlapping portion 131b, and hence no step is formed between the two inner peripheral surfaces.

The end of the valve element 132-6 has an outer peripheral edge formed with a round portion 132k.

As is apparent from comparison between FIG. 5 and FIG. 15, the operation of the discharge check valve 130-6 is not different from that of the FIG. 4 discharge check valve.

According to the sixth embodiment, it is possible to obtain the same advantageous effects as provided by the first embodiment. Further, since the outer peripheral surface of the valve element 132-6 is in contact with the inner peripheral surface 131j of the hollow cylindrical portion 131d as described above, the valve element 132-6 is difficult to fall during the motion. Furthermore, since there is no step between the inner peripheral surface of the overlapping portion 131b and the inner peripheral surface 131j of the hollow cylindrical portion 131d, the valve element 132-6 cannot be caught in the casing 131-6 during the motion. Moreover, since the outer peripheral edge of the end of the valve element 132-6 is formed with the round portion 132k, refrigerant gas hardly forms a vortex while passing the gas passages 131j, and hence it is possible to prevent generation of high-frequency noise due to generation of the vortex.

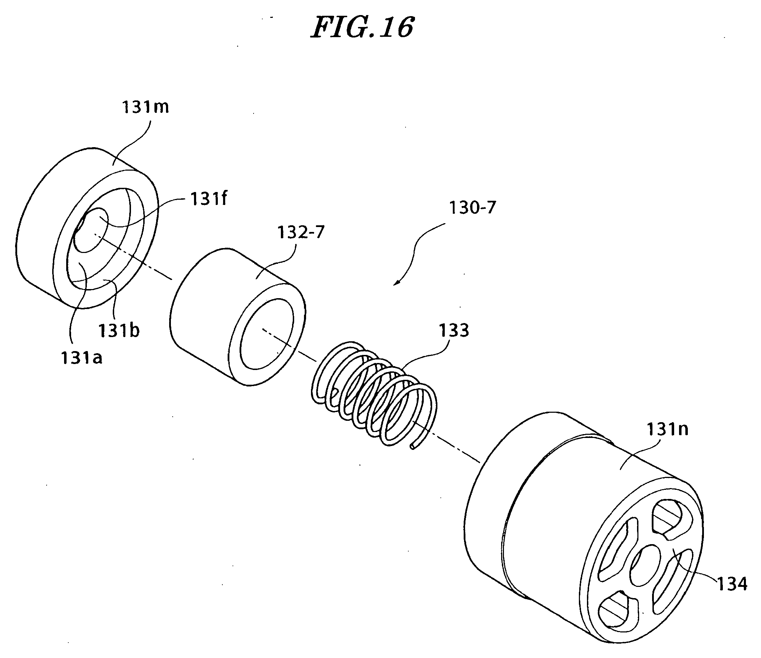

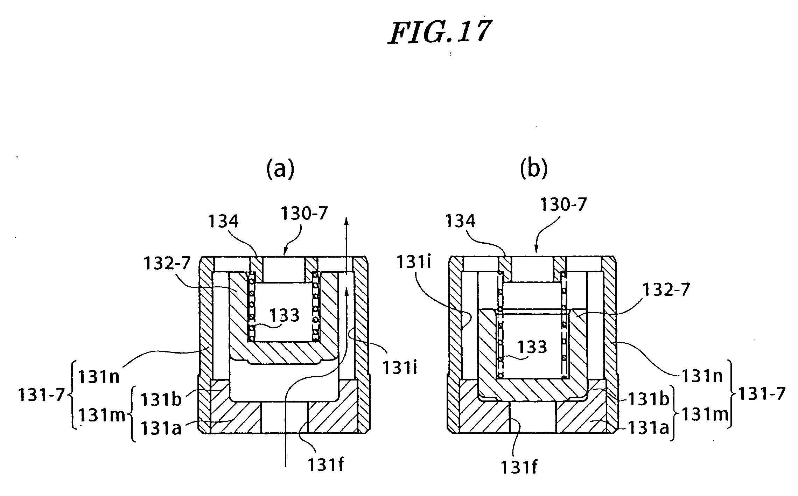

FIG. 16 is an exploded perspective view of a discharge check valve provided in a clutchless variable capacity swash plate compressor according to a seventh embodiment of the present invention. FIG. 17 illustrates the discharge check valve shown in FIG. 16, in which FIG. 17(a) is a longitudinal cross-sectional view of the discharge check valve in its closed state, and FIG. 17(b) is a cross-sectional view of the same in its open state.

The discharge check valve 130-7 is generally similar in construction to the discharge check valve shown in FIG. 4. Therefore, component parts and elements corresponding to those of the FIG. 4 discharge check valve are designated by identical reference numerals, and description thereof is omitted. In the following, a description will be given of only differences in construction from the FIG. 4 discharge check valve.

Further, component parts and elements other than the discharge check valve 130-7 are identical to those of the first embodiment, and hence description thereof is omitted.

Similarly to the discharge check valve 130-6 of the sixth embodiment, the discharge check valve 130-7 has a casing 131-7 formed therein with gas passages 131i. However, the casing 131-7 is different in construction from the casing 131-6 in the sixth embodiment.

The casing 131-7 is comprised of a valve seat portion 131m and a hollow cylindrical portion (guide portion) 131n.

The valve seat portion 131m has a bottom portion 131a and an overlapping portion 131b.

The valve seat portion 131m has one end in which the hollow cylindrical portion is received, and the other end integrally formed with a stopper 134. The hollow cylindrical portion 131n has an inner peripheral surface thereof formed with the gas passage inner peripheral surfaces 131i.

A valve element 132-7 is identical in construction to the valve element 132-6 in the sixth embodiment.

As is clear from comparison between FIG. 5 and FIG. 17, the operation of the discharge check valve 130-7 is not different from that of the FIG. 4 discharge check valve.

According to the seventh embodiment, it is possible to obtain the same advantageous effects as provided by the first embodiment.

As a variation of the sixth and seventh embodiments, the gas passages may be formed in the valve element 132. If the gas passages are formed in the valve element 132, the weight of the valve element 132 is reduced by the formation of the gas passages, which reduces an inertial force acting on the valve element 132, and hence suppresses occurrence of chattering.

Although in the above first to seventh embodiments, the casing 131 has the shape of a hollow cylinder, the casing 130 may have the shape of a hollow square rod so long as a portion of the casing 131 can guide the valve element 132.

Industrial Applicability

As described above, the clutchless variable capacity swash plate compressor according to the present invention is useful as a refrigerant compressor for an air conditioner installed on a vehicle, such as a passenger car, a bus, or a truck, and particularly suitable for use as a compressor for an air conditioner which is capable of controlling the amount of refrigerant gas to be discharged, according to the quantity required for cooling capacity.

**Claims**

1. A clutchless variable capacity swash plate compressor comprising:

   a shaft (5) rotatably supported within a housing;
   a swash plate (10) tiltably mounted on said shaft (5), for rotation in unison therewith; and
   a discharge passage (D) via which refrigerant gas delivered from a compression chamber (6a) to a discharge chamber (12) is sent out of the compressor;
   a discharge check valve (130) provided in said discharge passage (D) wherein
   said discharge check valve (130) has a valve-closing pressure set to a value lower than a valve-opening pressure, **characterized in that** said discharge check valve comprises a bottomed hollow cylindrical casing (131), a valve element (132) slidable within said casing (131) along a direction of depth of said casing (131), and a spring (133) for urging said valve element (132) in a direction of a bottom (131a) of said casing (131), said casing (131) having a first seating surface (131e) formed on said bottom (131a), a hole (131f) formed in a center of said first seating surface (131e), an overlapping portion (131b) formed in a manner continuous with said bottom (131a), for being fitted on an end of said valve element (132) by a predetermined length in the direction of depth, and a hollow cylindrical portion (131d), formed in a manner continuous with said overlapping portion (131b), for guiding said valve element (132) along the direction of depth, said valve element (132) having a second seating surface (132e) formed at an end face thereof, for opening and closing said hole (131f).

2. A clutchless variable capacity swash plate compressor according to claim 1, wherein said overlapping portion (131b) and said hollow cylindrical portion (131d) being formed in a manner continuous with each other via a tapered surface (131g).

3. A clutchless variable capacity swash plate compressor according to claim 1 or 2, comprising a stopper (134) for limiting motion of said valve element (132).

4. A clutchless variable capacity swash plate compressor according to claim 1, 2 or 3, wherein:

said valve element (132) is having a stepped surface (132d) that surrounds said second seating surface (132e), and forms a space into which pressure behind said valve element (132) is introduced, between said stepped surface (132d) and said first seating surface, when said second seating surface is in contact with said first seating surface (131e).

5. A clutchless variable capacity swash plate compressor according to any one of claims 1-4, wherein:

said discharge check valve (130) having at least one of valve opening-delaying means for delaying valve-opening thereof to thereby make a valve-closing pressure thereof lower than a valve-opening pressure thereof, and valve closing-delaying means for delaying valve-closing thereof
to thereby make the valve-closing pressure thereof lower than the valve-opening pressure thereof.

6. A clutchless variable capacity swash plate compressor according to any one of claims 1 to 5, wherein said discharge check valve (130) is having a valve opening-delaying means for delaying valve-opening thereof, said valve opening-delaying means being formed by the first seating surface (131e) formed in said one end of said casing (131), the hole (131f) formed in said first seating surface (131e), and the second seating surface (132e) formed on said valve element (132) in a manner opposed to said hole (131f),
said second seating surface (132e) being smaller than said first seating surface (131e) and larger than said hole.

7. A clutchless variable capacity swash plate compressor according to any one of claims 1 to 6, wherein:

said discharge check valve (130) is having a closing-delaying means for delaying valve-closing thereof,

wherein said valve closing-delaying means being formed by the first seating surface (131e) formed in said one end of said casing (131), the hole (131f) formed in said first seating surface (131e), and the overlapping portion (131b) formed in said casing (131) in a manner enclosing said first seating surface (131e), for having the end of said valve element (132) fitted therein in the direction of depth.

**Patentansprüche**

1. Kupplungsloser Taumelscheibenkompressor mit variablem Hub, umfassend:

eine Welle (5), drehbar gestützt in einem Kompressorgehäuse;
eine Taumelscheibe (10), kippbar montiert an der Welle (5) zur gemeinsamen Drehung damit; und
einen Ausstoßdurchtritt (D), über welchen Kältemittelgas, geliefert von einer Kompressionskammer (6a) zu einer Ausstoßkammer (12) aus dem Kompressor geleitet ist/wird;
ein Rückschlagventil (130), bereitgestellt in dem Ausstoßdurchgang (D), wobei das Ausstoßrückschlagventil (130) über einen Ventilschließdruck verfügt, eingestellt auf einen Wert niedriger als einen Ventilöffnungsdruck,

**dadurch gekennzeichnet, dass** das Ausstoßrückschlagventil ein bodenaufweisendes hohles zylindrisches Gehäuse (131), ein Ventilelement (132), gleitfähig in dem Gehäuse (131) entlang einer Richtung einer Tiefe des Gehäuses (131), und eine Feder (133) zum Beaufschlagen des Ventilelementes (132) in einer Richtung eines Bodens (131a) des Gehäuses (131) umfasst, wobei das Gehäuse (131) eine erste Sitzfläche (131e) aufweist, ausgebildet an dem Boden (131a), ein Loch (131f), ausgebildet in einer Mitte der ersten Sitzfläche (131e), einen Überlappungsabschnitt (131b), ausgebildet in einer Weise kontinuierlich mit dem Boden (131a), um gepasst zu sein an einem Ende des Ventilelementes (132), über eine vorbestimmte Länge in der Richtung der Tiefe, und einen hohlen zylindrischen Abschnitt (131d), ausgebildet in einer Weise kontinuierlich mit dem Überlappungsabschnitt (131b) zum Führen des Ventilelementes (132) entlang der Richtung der Tiefe, wobei das Ventilelement (132) eine zweite Sitzfläche (132e) aufweist, gebildet an einer Endfläche davon zum Öffnen und Schließen des Loches (131f).

2. Kupplungsloser Taumelscheibenkompressor mit variablem Hub nach Anspruch 1, bei welchem der Überlappungsabschnitt (131b) und der hohle zylindrische Abschnitt (131d) in einer kontinuierlichen Weise mit Bezug zueinander über eine abgeschrägte oder sich verjüngende Fläche (131g) ausgebildet sind.

3. Kupplungsloser Taumelscheibenkompressor mit variablem Hub nach Anspruch 1 oder 2, umfassend einen Anschlag (134) zur Bewegungseinschränkung des Ventilelementes (132).

4. Kupplungsloser Taumelscheibenkompressor mit variablem Hub nach Anspruch 1, 2 oder 3, bei welchem das Ventilelement (132) eine gestufte oder abgestufte Fläche (132d) aufweist, welche die zweite Sitzfläche (132c) umgibt oder umrundet und einen Raum bildet in welchem Druck hinter dem Ventilelement (132) eingeführt ist/wird zwischen die gestufte Fläche (132d) und die erste Sitzfläche, wenn die zweite Sitzfläche in Berührung steht mit der ersten Sitzfläche (131e).

5. Kupplungsloser Taumelscheibenkompressor mit variablem Hub nach einem der Ansprüche 1 bis 4, bei welchem das Ausstoßrückschlagventil (130) über zumindest eine Ventilöffnungsverzögerungseinrichtung verfügt zur Verzögerung der Ventilöffnung davon um somit einen Ventilschließdruck geringer zu gestalten als einen Ventilöffnungsdruck davon, sowie über eine Ventilverschlussverzögerungseinrichtung zur Ventilverschlussverzögerung um somit den Ventilverschlussdruck davon geringer zu gestalten als den Ventilöffnungsdruck davon.

6. Kupplungsloser Taumelscheibenkompressor mit variablem Hub nach einem der Ansprüche 1 bis 5, bei welchem das Ausstoßrückschlagventil (130) über eine Ventilöffnungsverzögerungseinrichtung verfügt zur Ventilöffnungsverzögerung davon, wobei die Ventilöffnungsverzögerungseinrichtung gebildet ist durch die erste Sitzfläche (131e), gebildet an dem einem Ende des Gehäuses (131), das Loch (131f), gebildet in der ersten Sitzfläche (131e) und die zweite Sitzfläche (132e), gebildet an dem Ventilelement (132) in einer Weise gegenüberstehend zu dem Loch (131f), wobei die zweite Sitzfläche (132e) kleiner ist als die erste Sitzfläche (131e) und größer als das Loch.

7. Kupplungsloser Taumelscheibenkompressor mit variablem Hub nach einem der Ansprüche 1 bis 6, bei welchem das Ausstoßrückschlagventil (130) über eine Schließverzögerungseinrichtung verfügt zur Verzögerung des Ventilschließens davon, wobei die Ventilschließverzögerungseinrichtung gebildet ist durch die erste Sitzfläche (131e), gebildet an dem einen Ende des Gehäuses (131), das Loch (131f), gebildet in der ersten Sitzfläche (131e) und den Überlappungsabschnitt (131b), gebildet in dem Gehäuse (131) in einer Weise, die erste Sitzfläche (131e) umgebend oder umschließend um das Ende des Ventilelementes (132) gepasst darin in einer Richtung der Tiefe zu haben.

**Revendications**

1. Compresseur à plateau oscillant à capacité variable sans embrayage comprenant :

    un arbre (5) supporté en rotation à l'intérieur d'un carter ;
    un plateau oscillant (10) monté inclinable sur ledit arbre (5), pour rotation à l'unisson avec celui-ci ; et
    un passage de décharge (D), par l'intermédiaire duquel un gaz réfrigérant délivré depuis une chambre de compression (6a) vers une chambre de décharge (12) est envoyé à l'extérieur du compresseur ;
    une valve de refoulement (130) fournie dans ledit passage de décharge (D), dans lequel la valve de refoulement (130) a une pression de fermeture de valve ajustée à une valeur inférieure à une pression d'ouverture de valve, **caractérisé en ce que** la valve de refoulement comprend un boitier cylindrique creux avec fond (131), un élément de valve (132) qui peut coulisser à l'intérieur du boitier (131) le long d'une direction de profondeur dudit boitier (131), et un ressort (133) pour solliciter l'élément de valve (132) dans une direction d'un fond (131a) du boitier (131), ledit boitier (131) ayant une première surface de portée (131e) formée sur le fond (131a), un trou (131f) formé dans un centre de la première surface de portée (131e), une partie de recouvrement (131b) formée de manière continue avec le fond (131a) pour être ajustée sur une extrémité dudit élément de valve (132) d'une longueur prédéterminée dans la direction de profondeur, et une partie cylindrique creuse (131d) formée de manière continue avec la partie de recouvrement (131b), pour guider l'élément de valve (132) le long de la direction de profondeur, l'élément de valve (132) ayant une deuxième surface de portée (132e) formée au niveau d'une face d'extrémité de celui-ci, pour ouvrir et fermer ledit trou (131f).

2. Compresseur à plateau oscillant à capacité variable sans embrayage selon la revendication 1, dans lequel la partie de recouvrement (131b) et la partie cylindrique creuse (131d) sont formées de manière continue l'une avec l'autre par l'intermédiaire d'une surface bizeautée (131g).

3. Compresseur à plateau oscillant à capacité variable sans embrayage selon la revendication 1 ou 2, comprenant un élément de butée (134) pour limiter le mouvement de l'élément de valve (132).

4. Compresseur à plateau oscillant à capacité variable sans embrayage selon la revendication 1, 2 ou 3, dans lequel l'élément de valve (132) a une surface en escalier (132d) qui entoure la deuxième surface de portée (132c) et forme un espace à l'intérieur duquel de la pression derrière l'élément de valve (132) est introduite, entre la surface en escalier (132d) et la première surface de portée, lorsque la deuxième surface de portée est en contact avec la première surface de portée (131e).

5. Compresseur à plateau oscillant à capacité variable sans embrayage selon l'une quelconque des revendications 1 à 4, dans lequel la valve de refoulement (130) a au moins l'un parmi un moyen de retardement d'ouverture de valve pour retarder une ouverture de valve de celui-ci, pour ainsi avoir une pression de fermeture de valve de celui-ci inférieure à une pression d'ouverture de valve de celui-ci, et un moyen de retardement de fermeture de valve pour retarder la fermeture de valve de celui-ci, pour ainsi avoir la pression de fermeture de valve de celui-ci inférieure à la pression d'ouverture de valve de celui-ci.

6. Compresseur à plateau oscillant à capacité variable sans embrayage selon l'une quelconque des revendications 1 à 5, dans lequel la valve de refoulement (130) a un moyen de retardement d'ouverture de valve pour retarder l'ouverture de valve de celui-ci, le moyen de retardement d'ouverture étant formé par la première surface de portée (131e) formée dans ladite une extrémité du boitier (131), le trou (131f) formé dans la première surface de portée (131e), et la deuxième surface de portée (132e) formée sur l'élément de valve (132) de manière opposée au trou (131f), la deuxième surface de portée (132e), étant inférieure à la première surface de portée (131e) et supérieure au trou.

7. Compresseur à plateau oscillant à capacité variable sans embrayage selon l'une quelconque des revendications 1 à 6, dans lequel :

la valve de refoulement (130) a un moyen de retardement de fermeture pour retarder la fermeture de valve de celui-ci,

dans lequel le moyen de retardement de fermeture de valve est formé par la première surface de portée (131e) formée dans ladite une extrémité du boitier (131), le trou (131f) formé dans la première surface de portée (131e) et la partie de recouvrement (131b) formée dans le boitier (131) de manière à entourer la première surface de portée (131e) pour avoir l'extrémité de l'élément de valve (132) ajustée à l'intérieur de celle-ci dans la direction de profondeur.

## FIG.1

# FIG.2

EP 1 365 150 B1

# *FIG.3*

## (a)

## (b)

*FIG.4*

# FIG.5

(a)　　　　　(b)　　　　　(c)　　　　　(d)

## FIG.6

DIFFERENTIAL PRESSURE ACROSS VALVE
DURING ON-MODE LOW-FLOW RATE OPERATION

VALVE LIFT

V 2

OFF

ON

0

V 1

DIFFERENTIAL PRESSURE ACROSS VALVE
DURING OFF-MODE (MINIMUM STROKE)
HIGHEST SPEED OPERATION

DIFFERENTIAL PRESSURE
ACROSS VALVE

EP 1 365 150 B1

# FIG.7

AREA OF CHECK VALVE INTERNAL PASSAGE

VALVE LIFT

0

EP 1 365 150 B1

*FIG.8*

21

# FIG.9

(a)

132b

132b

132-2

II

132b

132a

II

132b

(b)

132d

132d

132b

132-2

132d    132c    132e

# FIG.10

## FIG.11

(a)

III

132a
132
132b

III

(b)

132

(c)

IV

134-4
134h
134h

IV

(d)

134f
134d
134-4
134e
134g
134h

(e)

131
131f

(f)

133
130-4

# FIG.12

(a)

(b)

## FIG.13

EP 1 365 150 B1

## FIG.14

# FIG.15

(a) (b) (c) (d)

EP 1 365 150 B1

# FIG.16

EP 1 365 150 B1

EP 1 365 150 B1

# FIG.17

(a)                    (b)

*FIG.18*

(a)

(b)

EP 1 365 150 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5112198 A

- JP 2000002180 A